# FASCICULE DE BREVET EUROPEEN

(11) **EP 3 919 839 B1**
(45) Date de publication et mention de la délivrance du brevet: **08.10.2025**
(21) Numéro de dépôt: 21177614.1
(22) Date de dépôt: 03.06.2021
(51) Int. Cl.: F25B 43/02, G01N 35/00, F25B 9/00

(54) **PROCÉDÉ DE DÉTERMINATION DE L ÉVOLUTION DE LA COMPOSITION CIRCULANTE D'UN FLUIDE DE TRAVAIL**
VERFAHREN ZUR BESTIMMUNG DER ENTWICKLUNG DER ZIRKULIERENDEN ZUSAMMENSETZUNG EINES ARBEITSFLUIDS
METHOD FOR DETERMINING THE EVOLUTION OF THE CIRCULATING COMPOSITION OF A WORKING FLUID

(30) Priorité: 04.06.2020 FR 2005850
(43) Date de publication de la demande: 08.12.2021
(73) Titulaire: Commissariat à l'Energie Atomique et aux Energies Alternatives, 75015 Paris (FR)
(72) Inventeur: BLONDEL, Quentin, 38054 GRENOBLE (FR); CANEY, Nadia, 38054 GRENOBLE (FR); TAUVERON, Nicolas, 38054 GRENOBLE (FR)
(74) Mandataire: Ipsilon

(56) Documents cités:
- WO-A1-2009/094735
- US-A- 5 802 859
- US-A1- 2012 265 352

## Description

La présente invention concerne le domaine des machines thermodynamiques, notamment des pompes à chaleur, des machines à cycle de réfrigération/climatisation, des machines utilisées pour générer de l'énergie électrique à partir d'une source de chaleur, parmi lesquelles des machines thermodynamiques à cycle de Rankine.

De telles machines thermodynamiques mettent en œuvre des fluides de travail pouvant être composés de différentes espèces organiques afin :
- d'optimiser une ou plusieurs propriétés thermodynamiques, par exemple la pression de fonctionnement, ou
- de garantir le respect de contraintes environnementales, par exemple limiter l'effet de réchauffement climatique ou l'impact sur la couche d'ozone, ou
- de respecter des contraintes sécuritaires, par exemple en présentant une faible inflammabilité ou une faible toxicité.

En particulier, de tels fluides de travail peuvent présenter des propriétés zéotropes. Au fur et à mesure de la mise en œuvre des cycles, la composition d'un fluide de travail zéotrope s'écoulant dans la circuiterie, dite « composition circulante », peut évoluer. Elle peut différer de la composition du fluide de travail initialement chargé dans la machine thermodynamique, dite « composition de charge », comme cela est par exemple détaillé dans Abadi B, et al. "Investigation of organic Rankine cycles with zeotropic mixtures as a working fluid: Advantages and issues", Renewable and Sustainable Energy Reviews, 2017, 73 (Supplement C), pages 1000-1013.

La différence de composition peut se manifester sous la forme d'un « décalage de composition », généralement dénommé « shift » en anglais, qui correspond à une variation globale des teneurs des espèces formant le fluide de travail, entre l'instant initial de chargement du fluide de travail dans la machine thermodynamique et suite à la mise en œuvre de la machine thermodynamique. Le décalage est lié principalement au phénomène de « retard différentiel de changement de phase », dénommé « two-phase hold-up » en anglais, des espèces formant le fluide de travail dans les échangeurs de chaleur de la machine thermodynamique. Ce retard résulte des vitesses différentes des espèces organiques en phase liquide et en phase gazeuse. La différence d'affinité des espèces organiques peut en outre être modifiée au contact d'une huile de lubrification des organes de la machine thermodynamique et peut accentuer le décalage de composition.

Par ailleurs, la différence de composition peut provenir de la séparation des espèces formant le fluide de travail zéotrope, lors des étapes de changement de phase des espèces, par évaporation et condensation, du fait de températures de saturation différentes des fluides formés chacun d'une des espèces du fluide de travail zéotrope. Par exemple, après plusieurs cycles thermodynamiques, un échantillon de fluide prélevé dans la circuiterie peut ne contenir qu'une seule espèce organique parmi celles composant le fluide de travail zéotrope initialement chargé dans la machine thermodynamique.

En outre, les machines thermodynamiques peuvent nécessiter une lubrification des organes, par exemple de compression ou de détente, qui les composent. L'huile de lubrification circule ainsi de manière concomitante avec le fluide de travail dans la circuiterie. La quantité d'huile en circulation dans la machine est cependant difficile à déterminer. Il est toutefois important de la mesurer pour vérifier si elle assure un fonctionnement optimal des organes de la machine thermodynamique conformément aux spécificités définies par le fabricant de cette dernière. Notamment, le mélange formé par l'huile et le fluide de travail peut présenter des propriétés zéotropes autre que celles du fluide de travail, ce qui peut modifier le rendement thermodynamique de la machine thermodynamique.

Des procédés sont connus pour déterminer la composition circulante d'un fluide de travail.

Parmi elles, celle la plus usitée est la chromatographie en phase gazeuse, par exemple décrite dans Chen J., et al. "Calculating Circulation Concentration of Zeotropic Refrigerant Mixtures", HVAC&R Research, 1995, 1:3, pp. 219-231.

D'autres procédés connus mettent en œuvre des principes d'optique, de chromatographie ou d'électrostatique, par exemple par mesure la capacitance électrostatique, comme décrit dans la demande EP 0 838 643. Cependant, ils sont complexes et coûteux à mettre en œuvre et nécessitent d'être appliquées par des opérateurs formés et scientifiquement compétents dans les domaines précités. En outre, ils peuvent requérir des calibrations propres à chaque fluide de travail étudié.

D'autres procédés de mesure connus mettent en œuvre des principes de thermodynamique, par exemple par suivi d'un détente isenthalpique ou par suivi de l'écart de température et de pression de saturation, comme décrit dans la demande WO 2019/023267, ou de mécanique des fluides, par exemple par densimétrie du fluide de travail prélevé ou en circulation avec un débitmètre à effet Coriolis, qui caractérise directement la composition circulante du fluide de travail par détermination de la masse volumique de ce dernier. Bien qu'ils fournissent une estimation de la composition du fluide de travail plus précise que les procédés décrits au paragraphe précédent, ils nécessitent toutefois de modifier de façon conséquente l'architecture de la machine thermodynamique. Par exemple, l'intégration d'un débitmètre à effet Coriolis est complexe à réaliser, un tel débitmètre étant encombrant et couteux. La mesure par densimétrie, quant à elle, requiert un prélèvement de fluide circulant important qui peut nuire au bon fonctionnement de la machine thermodynamique. En outre, les procédés de mesure de grandeurs thermodynamiques requièrent la connaissance des propriétés thermodynamiques des espèces constituant le fluide de travail.

La demande de brevet US 5 802 859 A décrit un dispositif autonome pour la récupération de réfrigérant, comprenant un analyseur qualitatif pour déterminer la qualité du réfrigérant, un analyseur quantitatif pour déterminer la quantité du réfrigérant, un extracteur pour extraire le réfrigérant de son récipient et un système pour déterminer la valeur du réfrigérant contenu dans le récipient sur la base de l'analyse qualitative et de l'analyse quantitative.

La demande de brevet WO 2009/094735 A1 décrit un système d'identification d'un carburant comprenant une résistance pour chauffer le carburant présentant une valeur de résistance variable en fonction de sa température, un chronomètre indiquant un temps d'évaporation du carburant et des moyens de traitement de données qui calculent l'énergie absorbée par le carburant par l'intermédiaire de la puissance fournie à la résistance pendant la durée d'évaporation, le système identifiant la composition du carburant sur la base de l'énergie absorbée par le carburant et du temps d'évaporation du carburant.

La demande de brevet US 2012/265352 A1 décrit un système pour récupérer un réfrigérant d'un appareil, le système comprenant une vanne, un contrôleur de vanne, un séparateur communiquant avec la vanne qui sépare le réfrigérant d'une huile, un dégazeur communiquant avec le séparateur qui sépare le réfrigérant de l'huile.

Il existe donc un besoin pour un procédé de mesure de l'évolution de la composition d'un fluide de travail circulant dans une machine thermodynamique, qui de préférence est de mise en œuvre plus aisée que les procédés de l'art antérieur.

Par ailleurs, il existe un besoin pour déterminer simplement la quantité d'huile de lubrification en circulation avec le fluide de travail dans la circuiterie d'une machine thermodynamique.

Il existe enfin un besoin pour un dispositif pour mettre en œuvre une ou plusieurs étapes d'un tel procédé, qui soit d'intégration simple auprès d'une machine thermodynamique.

L'invention vise à satisfaire au moins partiellement ces besoins, et elle y parvient, en proposant, selon un premier de ses aspects, un procédé de détermination de l'évolution de la composition circulante d'un fluide de travail s'écoulant dans la circuiterie d'une machine thermodynamique, le procédé comportant les étapes de :
a) chargement de la circuiterie au moyen d'une composition initiale du fluide de travail zéotrope comportant au moins deux espèces volatiles en des proportions prédéterminées,
b) prélèvement, après la mise en œuvre de plusieurs cycles thermodynamiques par la machine thermodynamique, d'un échantillon de fluide qui s'écoule dans la circuiterie et qui contient le fluide de travail,
c) évaporation du fluide de travail ainsi prélevé comportant la mesure de l'évolution de la masse de la portion liquide de l'échantillon de fluide au cours de l'évaporation, et l'évaluation d'un temps caractéristique d'évaporation correspondant au moyen de l'évolution de la dite masse, et
d) détermination de la composition circulante du fluide de travail prélevé au moyen du temps caractéristique d'évaporation dudit fluide de travail et de temps caractéristiques d'évaporation de différents fluides étalon contenant chacun une ou plusieurs des espèces volatiles en des proportions variées, les temps caractéristiques d'évaporation des fluides étalon et le temps d'évaporation du fluide de travail étant déterminés dans des conditions d'évaporation identiques.

L'invention permet de déterminer facilement la composition circulante du fluide de travail par simple évaporation de ce dernier, en profitant de la volatilité des espèces volatiles qui le composent.

En outre, la mesure de la masse de ladite portion liquide peut ainsi être réalisée par simple pesée au moyen d'une balance. La mise en œuvre est ainsi aisée.

En particulier, la mise en œuvre du procédé peut ne pas nécessiter de modification de la machine thermodynamique, hormis pour prélever l'échantillon de fluide dans la circuiterie.

Par ailleurs, la mise en œuvre du procédé peut être automatisée, sans requérir ni d'étape de calibration spécifique au fluide de travail s'écoulant dans la circuiterie ni l'intervention d'un opérateur spécialisé.

Le prélèvement est de préférence effectué au cours d'une phase de fonctionnement stationnaire de la machine thermodynamique.

Le prélèvement peut être effectué par pompage de l'échantillon de fluide hors de la circuiterie.

Le procédé peut ne requérir qu'une faible masse prélevée pour caractériser la composition circulante du fluide de travail. Avantageusement, le fonctionnement de la machine thermodynamique n'est que faiblement, voire pas impacté par la mise en œuvre du procédé selon l'invention. Notamment, la masse de l'échantillon peut être comprise entre 15 g et 25 g, par exemple égale à 20 g. Elle peut être inférieure à 15 g, en particulier lorsque le module de mesure, tel que décrit par exemple par la suite, est suffisamment précis pour mesurer de faibles variations de masse.

L'échantillon de fluide peut être constitué pour 100 % de sa masse par le fluide de travail.

En variante, l'échantillon de fluide peut contenir, en plus du fluide de travail, au moins un composant non évaporable, plus particulièrement une huile, qui reste liquide dans les conditions d'évaporation mises en œuvre à l'étape c). L'huile est par exemple destinée à la lubrification d'au moins un organe disposé le long de la circuiterie, par exemple d'une pompe ou d'un compresseur. Une telle huile de lubrification peut circuler concomitamment avec le fluide de travail dans la circuiterie. De préférence, l'échantillon de fluide est constitué pour 100 % de sa masse, par le fluide de travail prélevé et l'huile.

A l'étape c), l'échantillon de fluide prélevé est de préférence disposé dans un récipient d'évaporation. Le fluide de travail peut être évaporé par aspiration à travers une hotte. L'évolution temporelle de la masse de la portion liquide de l'échantillon de fluide peut être déterminée par pesée de la portion liquide de l'échantillon contenu dans le récipient d'évaporation.

Le temps caractéristique d'évaporation peut correspondre à la durée nécessaire pour que toute la masse du fluide de travail soit sous forme gazeuse. La mesure du temps caractéristique est ainsi particulièrement précise. Une telle manière de déterminer le temps caractéristique est particulièrement bien adaptée lorsque l'échantillon de fluide est constitué par le fluide de travail.

Selon une variante préférée, le procédé comporte à l'étape c) la détermination d'une fonction d'interpolation linéaire d'au moins une partie de l'évolution temporelle de la masse de la portion liquide de l'échantillon de fluide, le temps caractéristique d'évaporation du fluide de travail prélevé étant déterminé au moyen de la fonction d'interpolation.

La fonction d'interpolation peut être tangente à l'évolution de la masse de la portion liquide de l'échantillon de fluide sur la plage temporelle d'interpolation de ladite évolution. La masse de ladite portion liquide peut être mesurée sur une durée au moins égale à la durée nécessaire pour que la perte relative de masse de l'échantillon de fluide soit de 50 %, voire de 70 %.

A l'étape c), l'évolution temporelle de la masse de la portion liquide de l'échantillon de fluide peut être mesurée jusqu'à ce que le rapport entre la variation de la masse de la portion liquide mesurée à deux instants de mesure séparés l'un de l'autre d'au moins 3600 secondes, sur la masse initiale de l'échantillon de fluide soit inférieur ou égal à 0,03 %. La masse qui est alors mesurée est ainsi la masse de composant liquide non évaporable, notamment à la masse d'huile, contenu dans l'échantillon de fluide le cas échéant. Le procédé permet avantageusement d'estimer simplement la quantité d'huile en circulation dans la machine thermodynamique, qui jusqu'à l'invention était un paramètre difficile à mesurer.

En variante, la masse de ladite portion liquide de l'échantillon de fluide peut être mesurée sur une durée au plus égale à la durée nécessaire pour que la perte relative de masse de l'échantillon de fluide soit de 90 %, voire de 80 %.

Par « perte relative de masse » de l'échantillon de fluide, on considère le rapport de la différence entre la masse initiale de l'échantillon et la masse mesurée sur la masse initiale de l'échantillon.

La masse de la portion liquide de l'échantillon de fluide peut être interpolée sur une plage temporelle d'interpolation dont la borne supérieure est au plus égale à la durée nécessaire pour que la perte relative de masse de l'échantillon de fluide soit de 80 %, voire de 70 %, voire de 60 %, voire de 50 %. La borne inférieure de la plage temporelle d'interpolation peut être au moins égale à la durée d'évaporation nécessaire pour que la perte relative de masse de l'échantillon de fluide soit de 10 %, voire de 20 %.

Le temps caractéristique d'évaporation du fluide de travail peut être déterminé comme étant le temps pour lequel la fonction d'interpolation est nulle. Une telle détermination du temps caractéristique est par exemple adaptée lorsque la masse de ladite portion liquide de l'échantillon de fluide est mesurée sur une durée au plus égale à la durée nécessaire pour que la perte relative de masse de l'échantillon de fluide soit de 90 %.

De préférence, le temps caractéristique d'évaporation du fluide de travail est déterminé comme étant le temps pour lequel la valeur de la fonction d'interpolation est égale à la masse de composant liquide non évaporable dans l'échantillon de fluide. De manière inattendue, les inventeurs ont constaté que le temps caractéristique d'évaporation ainsi déterminé est peu dépendant, voire indépendant de la présence ou de l'absence du composant liquide non évaporable dans l'échantillon de fluide.

De préférence, à l'étape d), la comparaison est effectuée au moyen d'au moins cinq temps caractéristiques de fluides étalon. De préférence, lorsque le fluide de travail initialement chargé est formé de première et deuxième espèces volatiles, cinq fluides étalons sont constitués par les première et deuxième espèces volatiles dans les proportions massiques suivantes : 100/0, 75/25, 50/50, 25/75 et 0/100.

Notamment, lorsque la composition du fluide de travail comporte au moins n espèces volatiles, au moins n des fluides étalons différents les uns des autres sont constitués chacun par une des n espèces volatiles. D'autres fluides étalons peuvent être utilisés présentant des compositions présentant au moins j des espèces volatiles, j étant inférieur ou égal à n en des proportions variées.

A l'étape d), la composition circulante du fluide de travail est de préférence déterminée au moyen d'un abaque généré à partir des temps caractéristiques des fluide étalon et qui fournit pour une composition constituée d'une ou plusieurs des espèces volatiles, le temps caractéristique correspondant.

L'abaque est de préférence enregistré sur un moyen de stockage numérique.

L'abaque peut être généré par interpolation des temps caractéristiques des fluides étalon.

La composition circulante du fluide de travail peut être déterminée en comparant le temps caractéristique du fluide de travail contenu dans l'échantillon de fluide avec l'abaque.

En particulier, elle peut être déterminée au moyen d'un ordinateur. L'ordinateur a une mémoire dans laquelle est chargée un programme comportant des instructions pour effectuer la comparaison ainsi que l'abaque, et un processeur configuré pour exécuter les instructions de manière à fournir la composition circulante comme résultat de l'exécution.

En particulier, la composition circulante du fluide de travail peut être déterminée en recherchant dans l'abaque, la composition présentant le temps caractéristique le plus proche du temps caractéristique du fluide de travail. La recherche peut être mise en œuvre par une méthode de régression polynomiale d'ordre supérieur ou égal à 2.

Les temps caractéristiques d'évaporation des fluides étalon sont déterminés dans des conditions d'évaporation identiques à celles dans lesquelles le fluide de travail contenu dans l'échantillon de fluide est évaporé.

Par « conditions d'évaporation identiques », on entend qu'une masse initiale de l'échantillon de fluide prélevé et des mêmes masses de chacun des fluides étalon sont évaporées dans un même récipient ou dans des récipients identiques et dans les mêmes conditions de température, de pression, de débit d'aspiration, et optionnellement de débit de prélèvement.

En particulier, les fluides étalon et le fluide de travail contenu dans l'échantillon peuvent être évaporés au sein de la même unité d'évaporation.

Par ailleurs, le procédé comporte de préférence, postérieurement à l'étape c), la condensation du fluide de travail puis la réinjection du fluide de travail à l'état liquide dans la circuiterie. Ainsi, la quantité de fluide de travail s'écoulant dans la circuiterie n'est pas modifiée que par la mise en œuvre des étapes a) à c).

La pression du fluide de travail réinjecté peut être inférieure à la pression du fluide de travail prélevé.

Par ailleurs, la circuiterie peut comporter un organe de détente, par exemple une vanne de détente, ou un organe de compression, et l'échantillon peut être prélevé à l'étape b) préalablement à son entrée dans l'organe de détente ou postérieurement à sa sortie de l'organe de compression.

En ce qui concerne les espèces volatiles, celles-ci sont différentes les unes des autres.

Elles peuvent être des fluides frigorigènes conventionnels.

De préférence, au moins une, voire toutes les espèces volatiles sont organiques.

En particulier, au moins une des espèces volatiles, voire chacune des espèces volatiles, peut être choisie parmi les chlorofluorocarbones (CFC), les hydrofluorocarbones (HFC), les hydrocarbures (HC), les hydrochlorofluorocarbones (HCFC), les hydrofluoroéthers (HFE), les hydrofluorooléfines (HFO), les Hydrochlorofluorooléfines (HCFO), les Perchlorocarbones (PCC), les Perfluorocarbones (PFC), les Hydrochlorocarbones (HCC), les hydrooléfines (HO) et les siloxanes.

Par exemple, chacune des espèces organiques est choisie parmi le dodécafluoro-2-méthylpentan-3-one de formule CF₃CF₂C(O)CF(CF₃)₂ et le 1-méthoxyheptafluoropropane (C₃F₇OCH₃).

En variante, au moins une, voire toutes les espèces volatiles sont inorganiques. Elles sont par exemple choisies parmi l'ammoniaque et le dioxyde de carbone.

L'invention concerne encore, selon un deuxième de ses aspects, un dispositif comportant une machine thermodynamique comportant une circuiterie pour contenir un fluide de travail et un module de mesure en communication fluidique avec la circuiterie, le module de mesure comportant :
- une unité de prélèvement pour prélever dans la circuiterie un échantillon de fluide contenant le fluide de travail,
- une unité d'évaporation pour évaporer au moins partiellement, de préférence entièrement, le fluide de travail contenu dans l'échantillon de fluide prélevé, et
- une balance pour peser la masse de la portion liquide de l'échantillon de fluide au cours de l'évaporation.

Le dispositif permet de caractériser l'évolution de la masse la portion liquide de l'échantillon de fluide au cours de l'évaporation du fluide de travail. Avantageusement, le module de mesure est indépendant de la machine thermodynamique. Par exemple, il peut être remplacé dans le cas où l'un de ses constituants est défectueux, sans que cela n'impacte le fonctionnement de la machine thermodynamique. Par ailleurs, l'évaporation du fluide de travail peut être obtenue par de simples variations de température et/ou pression.

Dans un mode de réalisation, la circuiterie contient le fluide de travail, qui peut être tel que décrit ci-dessus.

De préférence, l'unité de prélèvement comporte un récipient d'évaporation pour contenir l'échantillon de fluide, une pompe à vide pour extraire un gaz contenu dans le récipient d'évaporation et une vanne de prélèvement disposée le long d'un chemin fluidique reliant la circuiterie au récipient d' évaporation. Ainsi, par suite de l'actionnement de la vanne de prélèvement pour mettre la circuiterie en communication de fluide avec le récipient d'évaporation, l'échantillon de fluide peut être aspiré dans le récipient d'évaporation sous l'effet d'une dépression générée par la pompe à vide dans ledit récipient d'évaporation. Par ailleurs, la pompe à vide permet d'extraire les corps étrangers qui pourraient perturber la mesure de la masse au cours de l'évaporation.

Par ailleurs, une pompe de transfert peut être disposée sur un chemin de fluide reliant la vanne de prélèvement et le récipient d'évaporation, pour faciliter l'écoulement de l'échantillon de fluide de la circuiterie vers le récipient d'évaporation. La pompe de transfert peut ainsi permettre en plus de la pompe à vide le transfert du fluide de travail depuis la circuiterie jusque dans le récipient d'évaporation.

L'unité d'évaporation peut comporter un organe de chauffage pour établir dans le récipient d'évaporation une température induisant l'évaporation du fluide de travail.

L'unité d'évaporation peut comporter une hotte aspirante pour évacuer le fluide de travail sous forme gazeuse hors de l'unité d'évaporation. Elle peut comporter un contrôleur de hotte pour réguler le débit d'aspiration et/ou la vitesse d'aspiration de la hotte aspirante.

La hotte aspirante peut comporter une enceinte pour contenir l'échantillon de fluide.

Le contrôleur de hotte peut être configuré pour réguler la pression au sein de l'enceinte, notamment lorsque l'enceinte est hermétiquement close.

De préférence, le module de mesure comporte une unité de collecte en communication fluidique avec l'unité d'évaporation et configurée pour stocker le fluide de travail provenant de l'unité d'évaporation. L'unité de collecte permet de recueillir le fluide de travail prélevé par exemple en vue de le recycler dans la circuiterie. Elle limite ainsi l'effet du retrait du fluide de travail de la circuiterie sur le fonctionnement de la machine thermodynamique.

L'unité de collecte comporte de préférence un condenseur pour liquéfier le fluide de travail provenant de l'unité d'évaporation.

L'unité de collecte peut en outre comporter un collecteur pour contenir le fluide de travail liquéfié par le condenseur.

Le module de mesure peut comporter une unité de réinjection pour réintroduire le fluide de travail dans la circuiterie. On évite ainsi que le fluide de travail ne soit rejeté dans l'atmosphère, notamment lorsque le fluide de travail est nocif pour l'environnement. L'unité de réinjection peut comporter un organe d'injection, par exemple une pompe ou un piston logé dans le collecteur, pour réinjecter de travail dans la circuiterie.

Par ailleurs, le module de mesure est de préférence configuré pour déterminer le temps caractéristique d'évaporation du fluide de travail prélevé.

De préférence, le module de mesure comporte une unité d'acquisition, connectée à la balance, configurée pour acquérir et stocker la mesure de la masse de la portion liquide de l'échantillon de fluide, en particulier au cours de l'évaporation du fluide de travail.

Le module de mesure peut comporter un chronomètre connecté à l'unité d'acquisition pour dater ladite mesure.

Le module de mesure peut comporter une unité d'analyse comportant une mémoire stockant des instructions pour calculer un temps caractéristique d'évaporation du fluide de travail prélevé à partir de la mesure de la masse stockée dans l'unité d'analyse, et un processeur pour exécuter les instructions.

De préférence, la mémoire stocke en outre une bibliothèque de temps caractéristiques d'évaporation de fluides étalon de compositions prédéterminées, l'unité d'analyse étant configurée pour déterminer la composition circulante du fluide de travail prélevé au moyen du temps caractéristique d'évaporation du fluide de travail prélevé et des temps caractéristiques d'évaporation des fluides étalon.

En ce qui concerne la machine thermodynamique, quel que soit l'aspect de l'invention considéré, elle peut présenter une ou plusieurs des caractéristiques suivantes. Elle peut être :
- un générateur d'énergie électrique au moyen d'une source thermique dont la température est inférieure à 350°C, ou
- une pompe à chaleur et/ou à réfrigération/climatisation, notamment pour application dans le domaine agroalimentaire.

La source thermique peut être un rejet thermique issu d'une industrie de transformation, par exemple métallurgique, chimique ou papetière. Elle peut être générée à partir d'une biomasse, ou être un collecteur solaire à concentration.

La machine thermodynamique peut comporter en succession :
- un organe de compression pour comprimer le fluide de travail sous forme gazeuse, un condenseur pour liquéfier le fluide de travail, un organe de détente, par exemple une vanne de détente et un évaporateur configuré pour vaporiser le fluide de travail, ou
- un organe de compression pour comprimer le fluide de travail sous forme liquide, un organe de chauffage pour vaporiser le fluide de travail, un organe de détente, par exemple une turbine, pour produire de l'énergie mécanique et un condenseur pour liquéfier le fluide de travail.

De préférence, le procédé selon le premier aspect de l'invention est ainsi au moins en partie mis en œuvre au moyen du dispositif selon le deuxième aspect de l'invention.

L'invention pourra être mieux comprise à la lecture de la description détaillée qui va suivre et des exemples et au moyen du dessin annexé dans lequel :
[Fig 1] la figure 1 illustre de manière schématique un exemple de dispositif selon l'invention,
[Fig 2] la figure 2 est un graphique représentant un exemple d'évolution en fonction de la durée t, exprimé en secondes, de mise en œuvre de l'étape d'évaporation, de la masse m, exprimée en grammes, de la portion liquide d'un échantillon de fluide constitué d'un fluide de travail au cours de l'évaporation du fluide de travail,
[Fig 3] la figure 3 est un graphique représentant un exemple d'évolution en fonction du temps t, exprimé en secondes, de mise en œuvre de l'étape d'évaporation, de la masse m, exprimée en grammes, de la portion liquide d'un échantillon de fluide constitué d'un fluide de travail et d'une huile au cours de l'évaporation du fluide de travail,
[Fig 4] la figure 4 est un graphique représentant l'évolution de la durée totale d'évaporation d'un fluide de travail formé de deux espèces organiques, en fonction de la teneur d'une desdites espèces, et
[Fig 5] la figure 5 illustre l'écart de composition circulante d'un fluide de travail entre l'instant de chargement initial d'une machine thermodynamique et l'instant de prélèvement après mise en œuvre de plusieurs cycles de fonctionnement dans ladite machine thermodynamique.

Par souci de clarté du dessin, les proportions des différents éléments constitutif des composants électroniques illustrés ne sont pas représentés à l'échelle.

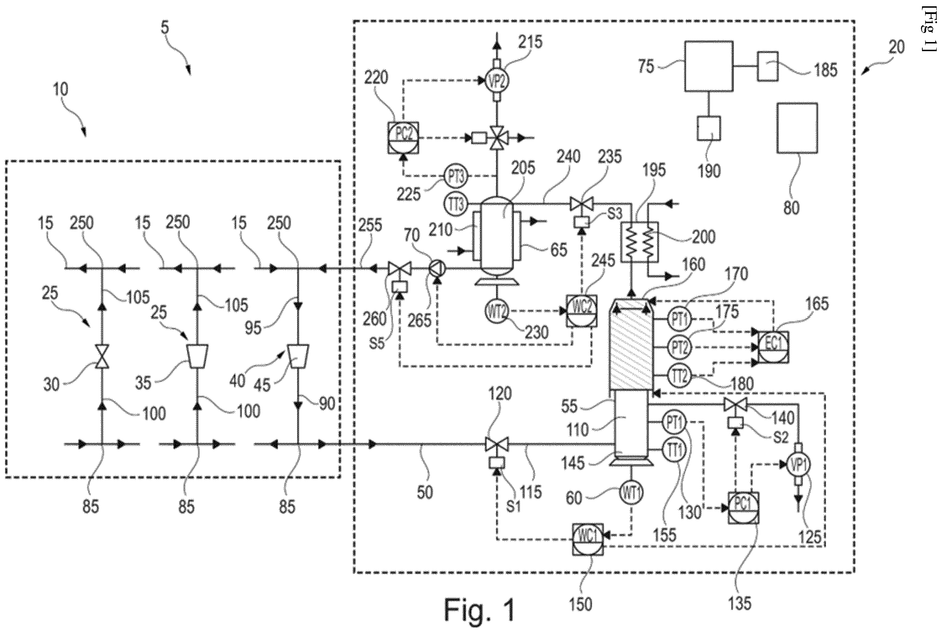

On a représenté sur la figure 1 un exemple de dispositif 5 selon l'invention.

Le dispositif comporte une machine thermodynamique 10, pouvant être à cycle de Rankine, comportant une circuiterie 15 dans laquelle s'écoule un fluide de travail, et un module de mesure 20 pour mesurer la composition circulante du fluide de travail.

Préalablement à la mise en fonctionnement de la machine thermodynamique, la circuiterie vide est chargée d'un fluide de travail aux propriétés zéotropes, dont la composition initiale est constituée d'au moins deux espèces organiques volatiles.

Dans l'exemple illustré, à des fins illustratives, le fluide de travail est initialement formé de 80 % en masse de Novec^{®} 649 et de 20 % en masse de HFE 7000, commercialisé en tant que Novec^{®} 7000 par la société 3M^{®}. Bien évidemment, l'invention n'est pas limitée à ces espèces organiques. En particulier, la composition de charge du fluide de travail peut comporter plus de deux espèces organiques.

La machine thermodynamique peut comporter un organe de détente 25, par exemple une vanne de détente 30 ou une turbine 35, pour diminuer la pression du fluide de travail sous forme liquide entre l'entrée et la sortie de l'organe de détente.

Dans une variante, elle peut comporter un organe de compression 40, par exemple une pompe 45, pour augmenter la pression du fluide de travail sous forme liquide entre l'entrée et la sortie de l'organe de détente.

Le module de mesure 20 comporte une unité de prélèvement 50, une unité d'évaporation 55 et une balance 60. De manière optionnelle, comme illustré, il comporte en outre une unité de collecte 65, une unité de réinjection 70, une unité d'acquisition 75 et une unité d'analyse 80.

L'unité de prélèvement 50 est configurée pour extraire un échantillon de fluide de la circuiterie 15.

L'unité de prélèvement peut être branchée sur la circuiterie par l'intermédiaire d'une prise de prélèvement 85.

Elle peut être branchée sur la sortie 90 de l'organe de compression 40, où la pression du fluide de travail est supérieure à la pression à l'entrée 95 de l'organe de compression. En variante, le cas échéant, elle peut être branchée sur l'entrée 100 de l'organe de détente, où la pression du fluide de travail est supérieure à la pression en sortie 105 de l'organe de détente.

L'unité de prélèvement 50 comporte un récipient d'évaporation 110 branché sur la prise de prélèvement au moyen d'un conduit 115. Elle comporte une vanne de prélèvement 120, notamment une électrovanne, pour mettre la prise de prélèvement 85 en communication de fluide avec l'unité d'évaporation 110.

L'unité de prélèvement 50 comporte par ailleurs une pompe à vide 125 pour réduire la pression au sein du récipient d'évaporation 110, un capteur de pression 130 pour mesurer la pression dans le récipient d'évaporation. La pompe à vide 125 peut être commandée par un contrôleur de pression 135 qui est asservi par la mesure de la pression effectuée par le capteur de pression 130.

Préalablement au prélèvement de l'échantillon de fluide, la vanne de prélèvement 120 est fermée pour isoler hermétiquement la circuiterie 85 du récipient d'évaporation. Le récipient d'évaporation est surmonté d'un couvercle, non représenté, et un vide primaire peut être établi dans le récipient d'évaporation, jusqu'à ce que la pression qui y règne atteigne une valeur prédéterminée mesurée par le capteur de pression 130. Le contrôleur de pression 135 commande alors la fermeture d'une vanne 140 disposée le long d'un chemin fluidique entre le récipient d'évaporation 110 et la pompe à vide 125, pour assurer le maintien du vide primaire.

La vanne de prélèvement 120 est ensuite ouverte et l'échantillon de fluide peut alors pénétrer dans le récipient d'évaporation sous un effet d'aspiration résultant de la différence de pression entre la prise de prélèvement 85 et le récipient d'évaporation 110.

Par ailleurs, comme décrit ci-dessus, le module de mesure 20 comporte une balance 60, qui peut être au contact du récipient d'évaporation 110, pour peser la masse de l'échantillon de fluide 145 contenu dans le récipient d'évaporation.

Il peut comporter en outre un contrôleur de masse 150 connecté à la balance 60 et configuré pour commander la fermeture de la vanne de prélèvement 120 en fonction de la masse pesée par la balance. Ainsi, la vanne de prélèvement est fermée une fois que la masse prélevée dans la circuiterie atteint une valeur prédéterminée.

L'unité d'évaporation peut comporter un organe de chauffage, non représenté, pour chauffer l'échantillon de fluide contenu dans le récipient d'évaporation et une sonde de température 155 pour mesurer la température de l'échantillon de fluide 145 dans le récipient d'évaporation.

L'unité d'évaporation 55 peut en outre comporter une hotte aspirante 160 pour évacuer le fluide de transfert vaporisé hors du récipient d'évaporation 110.

Elle peut comporter un contrôleur de hotte 165 configuré pour réguler la température, la pression et le débit de fluide au sein de la hotte aspirante, sur la base des mesures fournies respectivement par une sonde de température 170, un capteur de pression 175 et un débitmètre 180.

Afin d'évaporer le fluide de travail prélevé, le couvercle recouvrant le récipient d'évaporation est ôté. Le fluide de travail est vaporisé dans le récipient d'évaporation 110 et est extrait du récipient d'évaporation par à la hotte aspirante 160 en direction de l'unité de collecte 65. Dans une variante non représentée, il peut être extrait du récipient d'évaporation et rejeté directement dans l'atmosphère environnante.

Par ailleurs, en différents instants, la masse de la portion liquide de l'échantillon de fluide est pesée par la balance 60 et est transmise à l'unité d'acquisition 75 qui l'enregistre, par exemple sur un support de sauvegarde numérique 185, tel qu'un disque dur ou une mémoire Flash. A cet effet, le module de mesure est doté d'un chronomètre 190 connecté à l'unité d'acquisition.

Dans l'exemple illustré, l'unité d'évaporation 55 est en communication de fluide avec l'unité de collecte 65.

L'unité de collecte 65 comporte un condenseur 195 en prise de fluide avec la sortie d'évacuation de la hotte aspirante 160, dans lequel le fluide de travail vaporisé est refroidi et passe à l'état liquide au contact d'une source froide, par exemple un serpentin 200 dans lequel circule un fluide de plus basse température que le fluide de travail.

L'unité de collecte 65 comporte en outre un collecteur 205 pour contenir le fluide de travail après son passage dans le condenseur 200. L'unité de collecte 65 est ceinturée par une veste de refroidissement 210 dans laquelle circule un fluide de refroidissement, pour maintenir le fluide de travail à l'état liquide.

L'unité de collecte 65 comporte en outre une pompe à vide 215 pour extraire l'air contenu dans le collecteur. L'extraction d'air peut être effectuée concomitamment avec le recueil du fluide de travail et peut être commandée au moyen d'un contrôleur de pression 220. Le débit de la pompe à vide 215 de l'unité de collecte peut être régulé au moyen de la pression de l'air extrait en sortie du collecteur 205 mesurée par un capteur de pression 225 relié au contrôleur de pression 220 de l'unité de collecte.

Par ailleurs, l'unité de collecte comporte une balance 230, pour mesurer la masse du fluide de travail contenu dans le collecteur ainsi qu'une électrovanne 235 disposée le long du conduit 240 reliant le collecteur 205 et le condenseur 200, et un contrôleur de masse de collecteur 245.

Le contrôleur de masse de collecteur 245 est configuré pour commander l'électrovanne 235 de l'unité de collecte 65 en position fermée lorsque la variation de masse du fluide de travail entre deux pesées successives par la balance 230 est sensiblement nulle, indiquant que tout le fluide de travail évaporé dans l'unité d'évaporation 55 a été recueilli dans le collecteur 205.

Par ailleurs, l'unité de réinjection 70 est branchée sur la circuiterie 85 au moyen d'une prise de réinjection 250. L'unité d'injection comporte un conduit 255 reliant la prise de réinjection au collecteur 205 et une électrovanne de réinjection 260 disposée le long du conduit 255. L'ouverture de l'électrovanne de réinjection 260 peut être commandée par le contrôleur de masse du collecteur 245, lorsque tout le fluide de travail a été recueilli dans le collecteur 260.

La réinjection du fluide de transfert peut être opérée sous l'effet de la variation de pression entre le collecteur 205 et la circuiterie 85. Pour l'accélérer, l'unité de réinjection peut comporter une pompe de réinjection 265 disposée le long du conduit 255. En variante non représentée, le collecteur peut comporter un piston pour comprimer le fluide de travail et l'évacuer du collecteur vers la prise de réinjection.

Une fois tout le fluide de transfert réinjecté dans la circuiterie, la pompe de réinjection est arrêtée et l'électrovanne de réinjection est fermée pour rendre étanche la connexion entre le module de mesure 20 et la circuiterie 85.

Comme cela a été décrit ci-dessus, le fluide de transfert contenu dans l'échantillon de fluide 145 est évaporé dans le récipient d'évaporation et la masse de la portion liquide de l'échantillon de fluide est mesurée au fur et à mesure de l'évaporation.

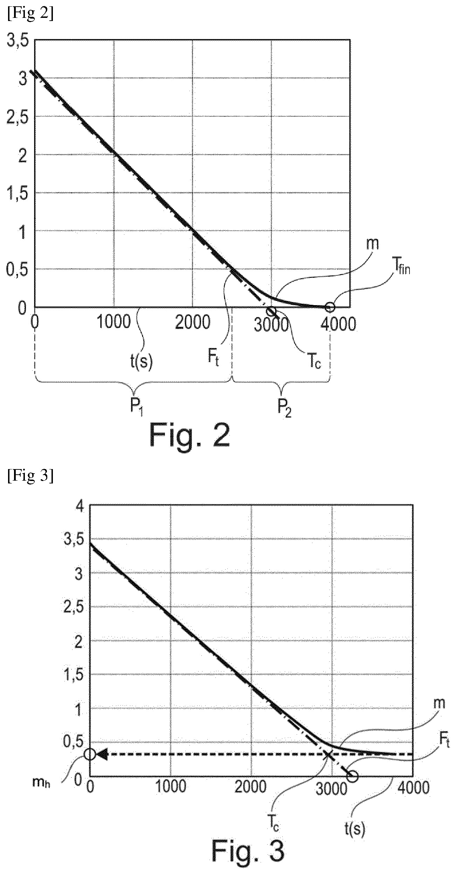

Les figures 2 et 3 illustrent respectivement l'évolution, mesurée par l'unité d'acquisition 75, de la masse m de la portion liquide d'un échantillon de fluide consistant en le fluide de travail et d'un échantillon consistant en le fluide de travail et en une huile, en fonction de la durée t de mise en œuvre de l'étape d'évaporation.

Un temps caractéristique d'évaporation Tc, intrinsèque au fluide de travail, peut être déterminé à partir des évolutions illustrées sur les figures 2 et 3. Il peut notamment être déterminé par l'unité d'analyse 80.

Dans l'exemple illustré, l'évolution temporelle de la masse de la portion liquide de l'échantillon évolue de manière sensiblement linéaire dans une première phase P₁, jusqu'à environ 2500 s, puis évolue de manière non linéaire dans une deuxième phase P₂, jusqu'à l'instant T_{fin} où toute la masse du fluide de travail est évaporée.

Le temps caractéristique d'évaporation Tc peut être la durée d'évaporation pour laquelle plus de temps nécessaire pour que plus de 95,0 %, voire plus de 99,0 %, de préférence plus de 99,9 %, de préférence 100 % de la masse du fluide de travail soit sous forme gazeuse. Il est par exemple aisément déterminable sur la figure 2, dans lequel l'échantillon de fluide consiste en le fluide de travail. Par exemple, le temps caractéristique d'évaporation Tc peut être le temps T_{fin}.

En variante, notamment lorsque l'échantillon de fluide comporte un composant liquide non évaporable, par exemple une huile, le temps caractéristique d'évaporation Tc peut être déterminé au moyen d'une fonction d'interpolation linéaire Ft d'au moins une partie de l'évolution temporelle de la masse de la portion liquide de l'échantillon de fluide en fonction de la durée d'évaporation. Il peut correspondre au temps pour lequel la fonction d'interpolation Ft est égale à la masse mₕ du composant liquide non évaporable. Comme cela est illustré sur la figure 3, lorsque le fluide de travail a été totalement évaporé, la masse de la portion liquide de l'échantillon fluide restante est la masse de composant liquide non évaporable, le cas échéant d'huile mₕ. Il est ainsi possible de déterminer la quantité d'huile en circulation dans la circuiterie de la machine thermodynamique.

Lorsque l'échantillon de fluide est formé par le fluide de travail et est donc exempt de composant liquide non évaporable, le temps caractéristique d'évaporation Tc correspond alors au temps pour lequel la fonction d'interpolation Ft est nulle.

Contre toute attente, les inventeurs ont observé que le temps caractéristique d'évaporation du fluide de travail, mesuré selon la présente variante, est sensiblement indépendant de la présence ou de l'absence d'huile.

L'interpolation est de préférence effectuée seulement une partie de la plage temporelle de mesure de ladite masse m. Dans l'exemple illustré, elle est effectuée sur la plage temporelle correspondant à la phase P1.

Le temps caractéristique Tc peut ensuite être comparé aux temps caractéristiques d'évaporation de fluides étalon déterminés dans des conditions d'évaporation identiques.

La détermination du temps caractéristique de chacun des fluides étalon peut être effectuée au moyen d'un module de mesure identique au module de mesure 20.

Les fluides étalon contiennent chacun une ou plusieurs des espèces organiques en des proportions variées.

En particulier, au moins deux des fluides étalon sont chacun constitués d'une seule des espèces organiques, l'espèce organique constituant le premier fluide étalon étant différente de celle constituant le deuxième fluide étalon.

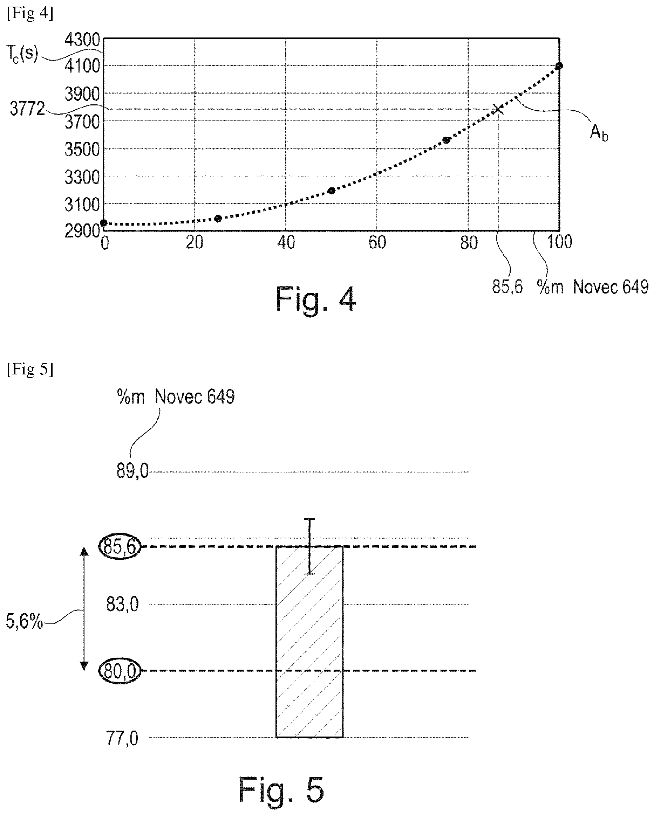

A titre illustratif, la figure 4 représente les valeurs de temps caractéristiques de différents fluides étalon constitués de Novec^{®} 649 et/ou de HFE 7000, qui sont les espèces constituant le fluide de travail circulant dans circuiterie de la machine thermodynamique. Les mesures d'évaporation ont été effectuées pour des fluides étalon contenant respectivement 0 %, 25 %, 50 %, 75 % et 100 % en masse de Novec^{®} 649, le complément étant le HFE 7000.

Une abaque A_{b} obtenue en interpolant les temps caractéristiques des fluides étalon peut alors être construite, qui est fonction des teneurs massiques des espèces organiques le constituant. La fonction d'interpolation choisie peut être polynomiale, au moins d'ordre 2.

Le temps caractéristique d'évaporation du fluide de travail contenu dans l'échantillon de fluide prélevé dans la circuiterie, considéré comme étant le temps Tfin sur la figure 2 est égal à 3772 s, est aussi indiqué sur la figure 4.

Par comparaison du temps caractéristique Tc avec l'abaque Ab, la composition circulante du fluide de travail peut ainsi être déterminée. Ainsi, en l'espèce, cette dernière contient 85,6 % de Novex^{®} 649 et 14,4 % de HFE 7000 alors que la composition de charge comporte respectivement 80,0 % de Novex^{®} 649 et 20,0 % de HFE 7000.

La composition circulante du fluide de travail présente donc un décalage de composition du fluide de travail de 5,6 % en Novex^{®} 649 et HFE 7000, comme illustré sur la figure 5.

Comme cela été présenté dans la description, l'invention fournit une méthode simple de mise en œuvre pour la mesure de la composition circulante d'un fluide de travail au sein d'une machine thermodynamique.

Bien entendu, l'invention n'est pas limitée aux modes de réalisation et de mise en œuvre présentés à titre illustratif dans la description, et elle est définie par les revendications.

## Revendications

1. Procédé de détermination de l'évolution de la composition circulante d'un fluide de travail s'écoulant dans la circuiterie (15) d'une machine thermodynamique (10), le procédé comportant les étapes de :
a) chargement de la circuiterie au moyen d'une composition initiale du fluide de travail zéotrope comportant au moins deux espèces volatiles en des proportions prédéterminées,
b) prélèvement, après la mise en œuvre de plusieurs cycles thermodynamiques par la machine thermodynamique, d'un échantillon de fluide (145) qui s'écoule dans la circuiterie et qui contient le fluide de travail,
c) évaporation du fluide de travail ainsi prélevé, comportant la mesure de l'évolution de la masse (m) de la portion liquide de l'échantillon de fluide au cours de l'évaporation, et l'évaluation d'un temps caractéristique d'évaporation (Tc) correspondant au moyen de l'évolution de la dite masse (m), et
d) détermination de la composition circulante du fluide de travail prélevé au moyen du temps caractéristique d'évaporation dudit fluide de travail et de temps caractéristiques d'évaporation de différents fluides étalon contenant chacun une ou plusieurs des espèces organiques volatiles en des proportions variées, les temps caractéristiques d'évaporation des fluides étalon et le temps d'évaporation du fluide de travail étant déterminés dans des conditions d'évaporation identiques.

2. Procédé selon la revendication 1, l'échantillon de fluide prélevé étant disposé dans un récipient d'évaporation (110) et l'évolution temporelle de la masse (m) de la portion liquide de l'échantillon de fluide étant déterminée par pesée de la portion liquide de l'échantillon contenu dans le récipient d'évaporation.

3. Procédé selon l'une quelconque des revendications 1 et 2, l'échantillon de fluide contenant, en plus du fluide de travail, au moins un composant non évaporable, notamment une huile, qui reste liquide dans les conditions d'évaporation mises en œuvre à l'étape c) ou l'échantillon de fluide étant constitué pour 100 % de sa masse par le fluide de travail.

4. Procédé selon l'une quelconque des revendications précédentes, le temps caractéristique d'évaporation correspondant à la durée temps nécessaire pour que toute la masse du fluide de travail soit sous forme gazeuse.

5. Procédé selon l'une quelconque des revendications 1 à 3, comportant à l'étape c) la détermination d'une fonction d'interpolation (Ft), linéaire, d'au moins une partie de l'évolution temporelle de la masse de la portion liquide de l'échantillon de fluide, le temps caractéristique d'évaporation (Tc) du fluide de travail prélevé étant déterminé au moyen de la fonction d'interpolation (Ft).

6. Procédé selon la revendication précédente prise en dépendance avec la revendication 3, le temps caractéristique d'évaporation (Tc) du fluide de travail étant déterminé comme étant le temps pour lequel la valeur de la fonction d'interpolation est égale à la masse (mₕ) de composant liquide non évaporable dans l'échantillon de fluide.

7. Procédé selon la revendication 5, le temps caractéristique d'évaporation du fluide de travail étant tel que la fonction d'interpolation est nulle.

8. Procédé selon l'une quelconque des revendications précédentes, l'évolution temporelle de la masse de la portion liquide de l'échantillon de fluide étant mesurée jusqu'à ce que le rapport entre la variation de la masse de la portion liquide mesurée à deux instants de mesure séparés l'un de l'autre d'au moins 3600 secondes, sur la masse initiale de l'échantillon de fluide soit inférieur ou égal à 0,03 % et/ou
la composition circulante du fluide de travail étant déterminée au moyen d'un abaque (Ab) généré à partir des temps caractéristiques des fluides étalon et qui fournit pour une composition constituée d'une ou plusieurs des espèces organiques, le temps caractéristique correspondant.

9. Procédé selon l'une quelconque des revendications précédentes, comportant postérieurement à l'étape c), la condensation du fluide de travail puis la réinjection du fluide de travail à l'état liquide dans la circuiterie (15).

10. Dispositif (5) comportant une machine thermodynamique (10) comportant une circuiterie (15) pour contenir un fluide de travail et un module de mesure (20) en communication fluidique avec la circuiterie, le module de mesure comportant:
- une unité de prélèvement (50) pour prélever dans la circuiterie un échantillon de fluide (145) contenant le fluide de travail,
- une unité d'évaporation (55) pour évaporer au moins partiellement, de préférence entièrement, le fluide de travail contenu dans l'échantillon de fluide prélevé, et
- une balance (60) pour peser la masse de la portion liquide de l'échantillon de fluide au cours de l'évaporation.

11. Dispositif selon la revendication précédente, l'unité de prélèvement comportant un récipient d'évaporation (110) pour contenir l'échantillon de fluide, une pompe à vide (125) pour extraire un gaz contenu dans le récipient d'évaporation et une vanne de prélèvement (12) disposée le long d'un chemin fluidique reliant la circuiterie (15) au récipient d'évaporation (110) et/ou
l'unité d'évaporation (55) comportant une hotte aspirante (160) pour évacuer le fluide de travail sous forme gazeuse hors de l'unité d'évaporation (110).

12. Dispositif selon l'une quelconque des revendications 10 et 11, le module de mesure comportant une unité de collecte (65) en communication fluidique avec l'unité d'évaporation (110) et configurée pour stocker le fluide de travail provenant de l'unité d'évaporation, de préférence l'unité de collecte (65) comportant un condenseur (195) pour liquéfier le fluide de travail provenant de l'unité d'évaporation.

13. Dispositif selon l'une quelconque des revendications 10 à 12, comportant une unité de réinjection (70) pour réintroduire le fluide de travail dans la circuiterie (15).

14. Dispositif selon l'une quelconque des revendications 10 à 13, le module de mesure comportant :
- une unité d'acquisition (75), connectée à la balance (60), configurée pour acquérir et stocker la mesure de la masse (m) de la portion liquide de l'échantillon de fluide (145), et
- une unité d'analyse (80) comportant une mémoire stockant des instructions pour calculer un temps caractéristique d'évaporation (Tc) du fluide de travail prélevé à partir de la mesure de la masse (m) stockée dans l'unité d'analyse, et un processeur pour exécuter les instructions, de préférence la mémoire stockant en outre une bibliothèque de temps caractéristiques d'évaporation de fluides étalon de compositions prédéterminées, l'unité d'analyse (75) étant configurée pour déterminer la composition circulante du fluide de travail prélevé au moyen du temps caractéristique d'évaporation (Tc) dudit fluide de travail prélevé et des temps caractéristiques d'évaporation des fluides étalon.

15. Dispositif selon l'une quelconque des revendications 10 à 14, la machine thermodynamique (10) étant :
- un générateur d'énergie électrique au moyen d'une source thermique dont la température est inférieure à 350°C, ou
- une pompe à chaleur et/ou à une machine à cycle de réfrigération/climatisation.

## Patentansprüche

1. Verfahren zur Bestimmung der Entwicklung der zirkulierenden Zusammensetzung eines Arbeitsfluids, das in dem Kreislauf (15) einer thermodynamischen Maschine (10) fließt, wobei das Verfahren die folgenden Schritte aufweist:
a) Befüllen des Kreislaufs mit einer Anfangszusammensetzung des zeotropen Arbeitsfluids, das mindestens zwei flüchtige Stoffe in vorbestimmten Anteilen enthält,
b) Entnehmen einer Probe (145) des in dem Kreislauf fließenden Fluids, das das Arbeitsfluid enthält, nach Durchführung mehrerer thermodynamischer Zyklen durch die thermodynamische Maschine,
c) Verdampfen des so entnommenen Arbeitsfluids einschließlich der Messung der Veränderung der Masse (m) des flüssigen Anteils der Fluidprobe während des Verdampfens und der Bewertung einer charakteristischen Verdampfungszeit (Tc), die der Veränderung der Masse (m) entspricht, und
d) Bestimmen der zirkulierenden Zusammensetzung des entnommenen Arbeitsfluids anhand der charakteristischen Verdampfungszeit dieses Arbeitsfluids und der charakteristischen Verdampfungszeiten verschiedener Standardfluids, die jeweils eine oder mehrere flüchtige organische Verbindungen in unterschiedlichen Anteilen enthalten, wobei die charakteristischen Verdampfungszeiten der Standardfluids und die Verdampfungszeit des Arbeitsfluids unter identischen Verdampfungsbedingungen bestimmt werden.

2. Verfahren nach Anspruch 1, wobei die entnommene Fluidprobe in einem Verdampfungsbehälter (110) angeordnet ist und die zeitliche Entwicklung der Masse (m) des flüssigen Anteils der Fluidprobe durch Wiegen des im Verdampfungsbehälter enthaltenen flüssigen Anteils der Probe bestimmt wird.

3. Verfahren nach einem der Ansprüche 1 und 2, wobei die Fluidprobe zusätzlich zum Arbeitsfluid mindestens eine nicht verdampfbare Komponente, insbesondere ein Öl, enthält, die unter den in Schritt c) angewandten Verdampfungsbedingungen flüssig bleibt, oder wobei die Fluidprobe zu 100 % ihrer Masse aus dem Arbeitsfluid besteht.

4. Verfahren nach einem der vorhergehenden Ansprüche, wobei die charakteristische Verdampfungszeit der Zeit entspricht, die erforderlich ist, damit die gesamte Masse des Arbeitsfluids in gasförmiger Form vorliegt.

5. Verfahren nach einem der Ansprüche 1 bis 3, das in Schritt c) das Bestimmen einer linearen Interpolationsfunktion (Ft) für mindestens einen Teil des zeitlichen Verlaufs der Masse des flüssigen Anteils der Fluidprobe aufweist, wobei die charakteristische Verdampfungszeit (Tc) des entnommenen Arbeitsfluids mithilfe der Interpolationsfunktion (Ft) bestimmt wird.

6. Verfahren nach dem vorhergehenden Anspruch in Abhängigkeit von Anspruch 3, wobei die charakteristische Verdampfungszeit (Tc) des Arbeitsfluids als die Zeit bestimmt wird, für die der Wert der Interpolationsfunktion gleich der Masse (mₕ) der nicht verdampfbaren flüssigen Komponente in der Fluidprobe ist.

7. Verfahren nach Anspruch 5, wobei die charakteristische Verdampfungszeit des Arbeitsfluids so ist, dass die Interpolationsfunktion null ist.

8. Verfahren nach einem der vorhergehenden Ansprüche, wobei die zeitliche Entwicklung der Masse des flüssigen Anteils der Fluidprobe gemessen wird, bis das Verhältnis zwischen der Masseänderung des flüssigen Anteils, gemessen zu zwei Messzeitpunkten, die mindestens 3600 Sekunden voneinander entfernt sind, und der Anfangsmasse der Fluidprobe kleiner oder gleich 0,03 % ist, und/oder die zirkulierende Zusammensetzung des Arbeitsfluids mithilfe eines Abakus (Ab) bestimmt wird, der aus den charakteristischen Zeiten der Standardfluids generiert wird und für eine Zusammensetzung, die aus einer oder mehreren organischen Verbindungen besteht, die entsprechende charakteristische Zeit angibt.

9. Verfahren nach einem der vorhergehenden Ansprüche, das anschließend an Schritt c) die Kondensation des Arbeitsfluids und anschließend die Rückführung des Arbeitsfluids in flüssigem Zustand in den Kreislauf (15) aufweist.

10. Vorrichtung (5) mit einer thermodynamischen Maschine (10), die einen Kreislauf (15) zur Aufnahme eines Arbeitsfluids und ein Messmodul (20) in Fluidverbindung mit dem Kreislauf aufweist, wobei das Messmodul Folgendes aufweist:
- eine Entnahmeeinheit (50) zum Entnehmen einer das Arbeitsfluid enthaltenden Fluidprobe (145) aus dem Kreislauf,
- eine Verdampfungseinheit (55) zum zumindest teilweisen, vorzugsweise vollständigen Verdampfen des in der entnommenen Fluidprobe enthaltenen Arbeitsfluids, und
- eine Waage (60) zum Wiegen der Masse des flüssigen Anteils der Fluidprobe während der Verdampfung.

11. Vorrichtung nach dem vorhergehenden Anspruch, wobei die Entnahmeeinheit einen Verdampfungsbehälter (110) zur Aufnahme der Fluidprobe, eine Vakuumpumpe (125) zum Absaugen eines im Verdampfungsbehälter enthaltenen Gases und ein Probenahmeventil (12) aufweist, das entlang eines Fluidwegs angeordnet ist, der den Kreislauf (15) mit dem Verdampfungsbehälter (110) verbindet, und/oder die Verdampfungseinheit (55) eine Abzugshaube (160) zum Abführen des Arbeitsfluids in gasförmiger Form aus der Verdampfungseinheit (110) aufweist.

12. Vorrichtung nach einem der Ansprüche 10 und 11, wobei das Messmodul eine Sammeleinheit (65) aufweist, die in Fluidverbindung mit der Verdampfungseinheit (110) steht und zum Speichern des Arbeitsfluids aus der Verdampfungseinheit konfiguriert ist, wobei die Sammeleinheit (65) vorzugsweise einen Kondensator (195) zum Verflüssigen des Arbeitsfluids aus der Verdampfungseinheit aufweist.

13. Vorrichtung nach einem der Ansprüche 10 bis 12 mit einer Rückführeinheit (70) zum Zurückführen des Arbeitsfluids in den Kreislauf (15).

14. Vorrichtung nach einem der Ansprüche 10 bis 13, wobei das Messmodul Folgendes aufweist:
- eine Erfassungseinheit (75), die mit der Waage (60) verbunden ist und so konfiguriert ist, dass sie die Messung der Masse (m) des flüssigen Anteils der Fluidprobe (145) erfasst und speichert, und
- eine Analyseeinheit (80) mit einem Speicher, der Anweisungen zur Berechnung einer charakteristischen Verdampfungszeit (Tc) des Arbeitsfluids speichert, das aus der Messung der in der Analyseeinheit gespeicherten Masse (m) entnommen wird, und einem Prozessor zum Ausführen der Anweisungen, wobei der Speicher vorzugsweise zusätzlich eine Bibliothek mit charakteristischen Verdampfungszeiten von Standardfluids mit vorbestimmten Zusammensetzungen speichert, wobei die Analyseeinheit (75) so konfiguriert ist, dass sie die zirkulierende Zusammensetzung des entnommenen Arbeitsfluids anhand der charakteristischen Verdampfungszeit (Tc) des entnommenen Arbeitsfluids und der charakteristischen Verdampfungszeiten der Standardfluids bestimmt.

15. Vorrichtung nach einem der Ansprüche 10 bis 14, wobei die thermodynamische Maschine (10) aus Folgendem besteht:
- einem Stromgenerator, der eine Wärmequelle mit einer Temperatur von weniger als 350 °C nutzt, oder
- einer Wärmepumpe und/oder eine Maschine mit Kühl-/Klimatisierungszyklus.

## Claims

1. Method for determining the evolution of the circulating composition of a working fluid flowing in the circuit (15) of a thermodynamic machine (10), the method comprising the steps of:
a) loading the circuit by means of an initial composition of the zeotropic working fluid comprising at least two volatile species in predetermined proportions,
b) withdrawing, after the implementation of several thermodynamic cycles by the thermodynamic machine, a fluid sample (145) which flows through the circuit and contains the working fluid,
c) evaporating the working fluid thus withdrawn, comprising the measurement of the evolution of the mass (m) of the liquid portion of the fluid sample during evaporation, and the evaluation of a corresponding characteristic evaporation time (Tc) by means of the evolution of said mass (m), and
d) determining the circulating composition of the withdrawn working fluid by means of the characteristic evaporation time of said working fluid and the characteristic evaporation times of different reference fluids each containing one or more of the volatile organic species in varying proportions, the characteristic evaporation times of the reference fluids and the evaporation time of the working fluid being determined under identical evaporation conditions.

2. Method according to Claim 1, the withdrawn fluid sample being disposed in an evaporation container (110) and the temporal evolution of the mass (m) of the liquid portion of the fluid sample being determined by weighing the liquid portion of the sample contained in the evaporation container.

3. Method according to either one of Claims 1 and 2, the fluid sample containing, in addition to the working fluid, at least one non-evaporable component, in particular an oil, which remains liquid under the evaporation conditions used in step c), or 100% of the mass of the fluid sample consisting of the working fluid.

4. Method according to any one of the preceding claims, the characteristic evaporation time corresponding to the duration required for the entire mass of the working fluid to be in gaseous form.

5. Method according to any one of Claims 1 to 3, comprising, in step c), determining a linear interpolation function (Ft) for at least part of the temporal evolution of the mass of the liquid portion of the fluid sample, the characteristic evaporation time (Tc) of the withdrawn working fluid being determined by means of the interpolation function (Ft).

6. Method according to the preceding claim when dependent on Claim 3, the characteristic evaporation time (Tc) of the working fluid being determined as being the time for which the value of the interpolation function is equal to the mass (mₕ) of non-evaporable liquid component in the fluid sample.

7. Method according to Claim 5, the characteristic evaporation time of the working fluid being such that the interpolation function is zero.

8. Method according to any one of the preceding claims, the temporal evolution of the mass of the liquid portion of the fluid sample being measured until the ratio of the variation in the mass of the liquid portion measured at two measurement times separated from each other by at least 3600 seconds to the initial mass of the fluid sample is less than or equal to 0.03%, and/or
the circulating composition of the working fluid being determined by means of a chart (Ab) which is generated from the characteristic times of the reference fluids and provides, for a composition consisting of one or more organic species, the corresponding characteristic time.

9. Method according to any one of the preceding claims, comprising, subsequent to step c), condensing the working fluid and then reinjecting the working fluid in the liquid state into the circuit (15).

10. Device (5) comprising a thermodynamic machine (10) comprising a circuit (15) for containing a working fluid and a measurement module (20) in fluidic communication with the circuit, the measurement module comprising:
- a withdrawal unit (50) for withdrawing a fluid sample (145) containing the working fluid from the circuit,
- an evaporation unit (55) for at least partially, preferably completely, evaporating the working fluid contained in the withdrawn fluid sample, and
- a balance (60) for weighing the mass of the liquid portion of the fluid sample during evaporation.

11. Device according to the preceding claim, the withdrawal unit comprising an evaporation container (110) for containing the fluid sample, a vacuum pump (125) for extracting a gas contained in the evaporation container and a withdrawal valve (12) disposed along a fluidic path connecting the circuit (15) to the evaporation container (110), and/or
the evaporation unit (55) comprising an extractor hood (160) for discharging the working fluid in gaseous form from the evaporation unit (110).

12. Device according to either one of Claims 10 and 11, the measurement module comprising a collection unit (65) in fluidic communication with the evaporation unit (110) and configured to store the working fluid coming from the evaporation unit, preferably the collection unit (65) comprising a condenser (195) for liquefying the working fluid coming from the evaporation unit.

13. Device according to any one of Claims 10 to 12, comprising a reinjection unit (70) for reintroducing the working fluid into the circuit (15).

14. Device according to any one of Claims 10 to 13, the measurement module comprising:
- an acquisition unit (75), connected to the balance (60), configured to acquire and store the measurement of the mass (m) of the liquid portion of the fluid sample (145), and
- an analysis unit (80) comprising a memory storing instructions for calculating a characteristic evaporation time (Tc) of the withdrawn working fluid on the basis of the measurement of the mass (m) stored in the analysis unit, and a processor for executing the instructions, preferably the memory also storing a library of characteristic evaporation times of reference fluids of predetermined compositions, the analysis unit (75) being configured to determine the circulating composition of the withdrawn working fluid by means of the characteristic evaporation time (Tc) of said withdrawn working fluid and the characteristic evaporation times of the reference fluids.

15. Device according to any one of Claims 10 to 14, the thermodynamic machine (10) being:
- a generator for generating electrical energy by means of a thermal source whose temperature is less than 350°C, or
- a heat pump and/or a machine with a refrigeration/air conditioning cycle.
